(19) Europäisches Patentamt
European Patent Office
Office européen des brevets

(11) **EP 4 029 693 A1**

(12) **EUROPEAN PATENT APPLICATION**
published in accordance with Art. 153(4) EPC

(43) Date of publication:
**20.07.2022 Bulletin 2022/29**

(51) International Patent Classification (IPC):
**B32B 27/00** (2006.01)     **C09J 133/04** (2006.01)
**C09J 7/38** (2018.01)

(21) Application number: **20864168.8**

(52) Cooperative Patent Classification (CPC):
**B32B 27/00; C09J 7/38; C09J 133/04**

(22) Date of filing: **08.09.2020**

(86) International application number:
**PCT/JP2020/033925**

(87) International publication number:
**WO 2021/049480 (18.03.2021 Gazette 2021/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2019 JP 2019165714**

(71) Applicant: **Soken Chemical & Engineering Co.,
Ltd.**
**Toshima-ku**
**Tokyo 171-8531 (JP)**

(72) Inventors:
• **YOSHIKAWA Midori**
**Sayama-shi, Saitama 350-1320 (JP)**
• **YONEKAWA Yuya**
**Sayama-shi, Saitama 350-1320 (JP)**

(74) Representative: **Dehns**
**St. Bride's House**
**10 Salisbury Square**
**London EC4Y 8JD (GB)**

(54) **ADHESIVE COMPOSITION FOR DECORATIVE FILM**

(57)     One embodiment of the present invention relates to an adhesive composition for a decorative film, a decorative film, or a decorative molded body. The adhesive composition for a decorative film contains a (meth)acrylic polymer (A) that satisfies (I) and (II) below, has a weight-average molecular weight of 300,000 or less as measured by gel permeation chromatography, and has a glass transition temperature of higher than 0°C and lower than 50°C as determined from a peak temperature of tan δ measured by dynamic mechanical analysis.

Relative to a total of 100 mass% of the (meth)acrylic polymer (A) and a (meth)acrylic polymer (Ah) having a glass transition temperature of 50°C or higher, a percentage content of the (meth)acrylic polymer (Ah) is less than 25 mass%. (I) The (meth)acrylic polymer (A) is a polymer of a monomer component that contains 19 mass% or more of a monomer (a1) that does not have a crosslinkable functional group. (II) A homopolymer of the monomer (a1) has a glass transition temperature of 0°C or higher.

EP 4 029 693 A1

**Description**

Technical Field

An embodiment of the present invention relates to an adhesive composition for a decorative film.

Background Art

In general, decorative films having adhesive layers are required to have a property to follow unlevel surfaces of adherends, cause less bubble entrapment between the adherend and the adhesive layer during application, be easy to reapply (initial re-applicability), resist detachment while the adherends are used (adhesion), and leave less adhesive residues and contamination on the adherends when the films are removed after the passage of a long time since the application (re-removability) (for example, refer to PTL 1 and PTL 2).

Citation List

Patent Literature

> [PTL 1] JPA 2009-035588
> [PTL 2] JPA 2009-234011

Summary of Invention

Technical Problem

In applying a decorative film to an adherend, the film may wrinkle or may be displaced from the application position, in which case the decorative film may be removed and re-applied. Here, when the tack of the adhesive layer of the decorative film is high, high tack strength is exhibited from immediately after application, and this degrades workability and may cause breaking of the film during removal, thereby leading to issues such as inability to reapply.
Usually, a decorative film includes a substrate, an adhesive layer, and a releasing film. When using the decorative film, the releasing film is removed, and the substrate is attached to an adherend with the adhesive layer therebetween. However, when a decorative film having bubbles between the substrate and the adhesive layer is attached to an adherend, portions having bubbles stick out, causing poor appearance and possibly inducing adhesive residue when the decorative film is removed after the passage of a long time. In other words, not only bubbles between the adherend and the adhesive layer that occur during application of the decorative film but also bubbles between the substrate and the adhesive layer are preferably reduced.
An embodiment of the present invention provides an adhesive composition that can form an adhesive layer that has a low tack and excellent initial re-applicability, has less bubbles between the substrate and the adhesive layer, and exhibits excellent re-removability after the passage of a long time since the application.

Solution to Problem

It is found that the aforementioned issues can be resolved by the following adhesive composition, and the present invention has thus been made. The present invention involves, for example, [1] to [7] below.
> [1] An adhesive composition for a decorative film, the adhesive composition including:
>
>> a (meth)acrylic polymer (A) that satisfies (I) and (II) below, has a weight-average molecular weight (Mw) of 300,000 or less as measured by gel permeation chromatography, and has a glass transition temperature (Tg) of higher than 0°C and lower than 50°C as determined from a peak temperature of tan $\delta$ measured by dynamic mechanical analysis,
>> in which, relative to a total of 100 mass% of the (meth)acrylic polymer (A) and a (meth)acrylic polymer (Ah) having a glass transition temperature (Tg) of 50°C or higher, a percentage content of the (meth)acrylic polymer (Ah) is less than 25 mass%.

(I) The (meth)acrylic polymer (A) is a polymer of a monomer component that contains 19 mass% or more of a monomer (a1) that does not have a crosslinkable functional group.
(II) A homopolymer of the monomer (a1) has a glass transition temperature (Tg) of 0°C or higher.

[2] The adhesive composition for a decorative film described in [1] above, in which the monomer (a1) is a (meth)acrylic acid ester.

[3] The adhesive composition for a decorative film described in [1] or [2] above, further including a crosslinking agent (B).

[4] A decorative film including a releasing film; an adhesive layer formed of the adhesive composition for a decorative film described in any one of [1] to [3] above, the adhesive layer being formed on the releasing film; and a substrate disposed on a surface of the adhesive layer, the surface being on an opposite side from the releasing film.

[5] The decorative film described in [4] above, in which the decorative film is used for vehicles.

[6] A decorative molded body including a molded body and an adhesive layer-attached substrate disposed on a surface of the molded body, the adhesive layer-attached substrate being obtained by removing the releasing film from the decorative film described in [4] or [5] above.

[7] The decorative molded body described in [6] above, in which the molded body is a vehicle.

Advantageous Effects of Invention

According to an embodiment of the present invention, an adhesive composition that can form an adhesive layer that has a low tack and excellent initial re-applicability, has less bubbles between the substrate and the adhesive layer, and exhibits excellent re-removability after the passage of a long time since the application can be provided.

Description of Embodiments

Hereinafter, embodiments for implementing one embodiment of the present invention are described.

[Adhesive composition for decorative film]

An adhesive composition for a decorative film according to an embodiment of the present invention (hereinafter may also be referred to as the "present composition") contains a (meth)acrylic polymer (A) that satisfies (I) and (II) below, has a weight-average molecular weight (Mw) of 300,000 or less as measured by gel permeation chromatography, and has a glass transition temperature (Tg) of higher than 0°C and lower than 50°C as determined from a peak temperature of a loss tangent (tan $\delta$) measured by dynamic mechanical analysis.

(I) The (meth)acrylic polymer (A) is a polymer of a monomer component that contains 19 mass% or more of a monomer (a1) that does not have a crosslinkable functional group.
(II) A homopolymer of the monomer (a1) has a glass transition temperature (Tg) of 0°C or higher.

By using the (meth)acrylic polymer (A), an adhesive composition that has a low tack and excellent initial re-applicability and can reduce occurrence of bubbles at the substrate/adhesive layer interface and occurrence of contamination and adhesive residue in re-removal after a long-term durability test is obtained.

In the present composition, the percentage content of a (meth)acrylic polymer (Ah) having a glass transition temperature (Tg) of 50°C or higher is less than 25 mass%. Here, the total of the polymer (A) and the polymer (Ah) is assumed to be 100 mass%.

The present composition preferably contains a crosslinking agent (B).

<<(Meth)acrylic polymer (A)>>

<Monomer (a1)>

The monomer component used to form the (meth)acrylic polymer (A) (hereinafter may also be referred to as the "polymer (A)") contains a monomer (a1) of which the homopolymer has a glass transition temperature (Tg) of 0°C or higher and which does not have a crosslinkable functional group. In other words, the polymer (A) has a constituent unit derived from the monomer (a1).

The monomer (a1) is a monomer of which the homopolymer has a glass transition temperature (Tg) of 0°C or higher and which does not have a crosslinkable functional group, and is preferably a (meth)acrylic acid ester of which the homopolymer has a Tg of 0°C or higher and which does not have a crosslinkable functional group.

A crosslinkable functional group is a functional group that can react with a functional group in the crosslinking agent (B) preferably contained in the adhesive composition and thereby form a crosslinked structure, and examples thereof include a carboxy group, an acid anhydride group, a hydroxy group, an amino group ($-NH_2$), and a monosubstituted amino group (-NRH where R represents a monovalent substituent such as an alkyl group).

A homopolymer of the monomer (a1) has a glass transition temperature (Tg) of 0°C or higher, preferably 20 to 120°C, more preferably 40 to 120°C, and yet more preferably 50 to 120°C. The monomer (a1) of which the homopolymer has a Tg within the aforementioned range is preferable since such a monomer contributes to setting the Tg of the (meth)acrylic polymer (A) to higher than 0°C and improving the cohesive force at high temperatures.

In the present invention, values described in Polymer Handbook Forth Edition (Wiley-Interscience 2003), for example, can be used as the glass transition temperatures (Tg) of homopolymers of the respective monomers.

The monomer (a1) is preferably an alkyl (meth)acrylate of which the homopolymer has a Tg of 0°C or higher. The number of carbon atoms in the alkyl group of the alkyl (meth)acrylate is preferably 1 to 12, more preferably 1 to 8, and yet more preferably 1 to 4. Here, the alkyl group may be a linear alkyl group or a branched alkyl group.

Examples of the alkyl (meth)acrylate of which the homopolymer has a Tg of 0°C or higher include methyl acrylate (Tg: 8°C), n-propyl acrylate (Tg: 3°C), t-butyl acrylate (Tg: 43°C), n-pentyl acrylate (Tg: 22°C), methyl methacrylate (Tg: 105°C), ethyl methacrylate (Tg: 65°C), n-propyl methacrylate (Tg: 35°C), isopropyl methacrylate (Tg: 81°C), t-butyl methacrylate (Tg: 118°C), n-butyl methacrylate (Tg: 20°C), and isobutyl methacrylate (Tg: 48°C).

Among these, methyl acrylate, t-butyl acrylate, methyl methacrylate, ethyl methacrylate, t-butyl methacrylate, and isobutyl methacrylate are preferable, and methyl methacrylate is more preferable.

Other examples of the monomer (a1) include alicyclic group-containing (meth)acrylates, aromatic ring-containing (meth)acrylates, alkoxyalkyl (meth)acrylates, and N,N-dialkylaminoalkyl (meth)acrylates of which the homopolymer have Tg of 0°C or higher. Examples of the alicyclic group-containing (meth)acrylates include cyclohexyl (meth)acrylate and isobornyl (meth)acrylate. Examples of the aromatic ring-containing (meth)acrylates include phenoxyethyl methacrylate, benzyl (meth)acrylate, and 2-naphthyl acrylate. An example of the alkoxyalkyl (meth)acrylates is ethoxyethyl methacrylate. An example of the N,N-dialkylaminoalkyl (meth)acrylates is N,N-dimethylaminoethyl (meth)acrylate.

The polymer (A) can have one or more than one constituent units derived from the monomer (a1).

In 100 mass% of the monomer component used to form the polymer (A), the percentage content of the monomer (a1) is 19 mass% or more, preferably 20 to 40 mass%, and more preferably 23 to 30 mass%. Such an embodiment is preferable from the viewpoint of improving re-applicability by decreasing the initial tack.

<Monomer (a2)>

The monomer component used to form the (meth)acrylic polymer (A) preferably further contains a monomer (a2) of which the homopolymer has a glass transition temperature (Tg) of lower than 0°C and which does not have a crosslinkable functional group. In other words, the polymer (A) preferably further has a constituent unit derived from the monomer (a2).

The monomer (a2) is a monomer of which the homopolymer has a glass transition temperature (Tg) of lower than 0°C and which does not have a crosslinkable functional group, and is preferably a (meth)acrylic acid ester of which the homopolymer has a Tg of lower than 0°C and which does not have a crosslinkable functional group.

A homopolymer of the monomer (a2) has glass transition temperature (Tg) of lower than 0°C, preferably -80 to -10°C, and more preferably -70 to -10°C. The monomer (a2) of which the homopolymer has a Tg within the aforementioned range is preferable since such a monomer contributes to setting the Tg of the (meth)acrylic polymer (A) to be in an appropriate range and improving tack strength.

The monomer (a2) is preferably an alkyl (meth)acrylate of which the homopolymer has a Tg of lower than 0°C. The number of carbon atoms in the alkyl group of the alkyl (meth)acrylate is preferably 1 to 12, more preferably 2 to 12, and yet more preferably 4 to 10. Here, the alkyl group may be a linear alkyl group or a branched alkyl group.

Examples of the alkyl (meth)acrylate of which the homopolymer has a Tg of lower than 0°C include ethyl acrylate (Tg: -24°C), isopropyl acrylate (Tg: -3°C), n-butyl acrylate (Tg: -50°C), isobutyl acrylate (Tg: -40°C), n-hexyl acrylate (Tg: -57°C), n-octyl acrylate (Tg: -65°C), isooctyl acrylate (Tg: -58°C), 2-ethylhexyl acrylate (Tg: -70°C), nonyl acrylate (Tg: -58°C), lauryl acrylate (Tg: -3°C), n-pentyl methacrylate (Tg: -5°C), n-hexyl methacrylate (Tg: -5°C), n-octyl methacrylate (Tg: -20°C), isooctyl methacrylate (Tg: - 45°C), 2-ethylhexyl methacrylate (Tg: -10°C), isodecyl methacrylate (Tg: -41°C), and lauryl methacrylate (Tg: - 65°C) .

Among these, ethyl acrylate, n-butyl acrylate, isooctyl acrylate, 2-ethylhexyl acrylate, isooctyl methacrylate, 2-ethylhexyl methacrylate, isodecyl methacrylate, and lauryl methacrylate are preferable, n-butyl acrylate, isooctyl acrylate, 2-ethylhexyl acrylate, isodecyl methacrylate, and lauryl methacrylate are more preferable, and n-butyl acrylate and 2-ethylhexyl acrylate are yet more preferable.

Other examples of the monomer (a2) include aromatic ring-containing (meth)acrylates, alkoxyalkyl (meth)acrylates, and alkoxypolyalkylene glycol mono(meth)acrylates of which the homopolymer has a Tg of lower than 0°C. An example of the aromatic ring-containing (meth)acrylates is phenoxyethyl acrylate. Examples of the alkoxyalkyl (meth)acrylates include methoxyethyl (meth)acrylate and ethoxyethyl acrylate. An example of the alkoxypolyalkylene glycol mono(meth)acrylates is ethoxydiethylene glycol acrylate.

The polymer (A) can have one or more than one constituent units derived from the monomer (a2).

In 100 mass% of the monomer component used to form the polymer (A), the percentage content of the monomer (a2) is preferably 51 to 81 mass%, more preferably 60 to 80 mass%, and yet preferably 66 to 76 mass%.

<Crosslinkable functional group-containing monomer (a3)>

The monomer component used to form the (meth)acrylic polymer (A) preferably further contains a monomer (a3) that has a crosslinkable functional group that can form a crosslinked structure by reacting with a functional group in the crosslinking agent (B), in other words, a crosslinkable functional group-containing monomer (a3). In other words, the polymer (A) preferably further has a constituent unit derived from the crosslinkable functional group-containing monomer (a3).

Examples of the crosslinkable functional group include a carboxy group, an acid anhydride group, a hydroxy group, an amino group ($-NH_2$), and a monosubstituted amino group (-NRH where R represents a monovalent substituent such as an alkyl group). Examples of the monomer (a3) include a carboxyl group- or acid anhydride group-containing monomer, a hydroxy group-containing monomer, and an amino group- or monosubstituted amino group-containing monomer.

Examples of the carboxy group- or acid anhydride group-containing monomer include carboxy group-containing (meth)acrylates such as $\beta$-carboxyethyl (meth)acrylate, 5-carboxypentyl (meth)acrylate, mono(meth)acryloyloxyethyl succinate, and $\omega$-carboxypolycaprolactone mono(meth)acrylate; monounsaturated aliphatic acids such as acrylic acid, methacrylic acid, and crotonic acid; and diunsaturated aliphatic acids such as maleic acid, fumaric acid, itaconic acid, and citraconic acid, and acid anhydrides thereof.

Examples of the hydroxy group-containing monomer include hydroxy group-containing (meth)acrylates, specifically, hydroxyalkyl (meth)acrylates such as 2-hydroxyethyl (meth)acrylate, 2-hydroxypropyl (meth)acrylate, 4-hydroxybutyl (meth)acrylate, 6-hydroxyhexyl (meth)acrylate, and 8-hydroxyoctyl (meth)acrylate. The number of carbon atoms in the alkyl group of the hydroxyalkyl (meth)acrylate is usually 2 to 8 and preferably 2 to 6.

Examples of the amino group- or monosubstituted amino group-containing monomer include N-alkylaminoalkyl (meth)acrylates such as N-methylaminoethyl (meth)acrylate and N-ethylaminoethyl (meth)acrylate.

The polymer (A) can have one or more than one constituent units derived from the monomer (a3).

In 100 mass% of the monomer component used to form the polymer (A), the percentage content of the monomer (a3) is preferably more than 0 mass% and 30 mass% or less, more preferably 1 to 25 mass%, and yet more preferably 5 to 15 mass%. When the percentage content of the monomer (a3) is lower than or equal to the upper limit value, the crosslinking density formed by the polymer (A) and the crosslinking agent (B) is not excessively high. When the percentage content of the monomer (a3) is higher than or equal to the lower limit value, a crosslinked structure is effectively formed, and an adhesive layer that has appropriate strength is obtained. The percentage content of the monomer (a3) is preferably within the aforementioned range from the viewpoint of improving re-applicability by decreasing the initial tack.

<Production conditions for (meth)acrylic polymer (A)>

The (meth)acrylic polymer (A) is obtained by polymerizing the monomer component. Examples of the polymerization method include known methods such as a solution polymerization method, a bulk polymerization method, an emulsion polymerization method, and a suspension polymerization method, and, among these, a solution polymerization method is preferable.

For example, a polymerization solvent and a monomer component are charged into a reactor, a polymerization initiator is added thereto, and a reaction is performed for 2 to 20 hours by setting the reaction start temperature to usually 40 to 100°C and preferably to 50 to 90°C, and maintaining the reaction system at a temperature of usually 50 to 90°C and preferably to 70 to 90°C. The polymerization reaction can be performed in an inert gas atmosphere such as nitrogen gas.

The polymer (A) is obtained by polymerizing the aforementioned monomer component, and, for example, may be a random copolymer or a block copolymer. Of these, a random copolymer is preferable.

Examples of the polymerization solvent include aromatic hydrocarbons such as benzene, toluene, and xylene; aliphatic hydrocarbons such as n-pentane, n-hexane, n-heptane, and n-octane; alicyclic hydrocarbons such as cyclopentane, cyclohexane, cycloheptane, and cyclooctane; ethers such as diethyl ether, diisopropyl ether, 1,2-dimethoxyethane, dibutyl ether, tetrahydrofuran, dioxane, anisole, phenylethyl ether, and diphenyl ether; halogenated hydrocarbons such as chloroform, carbon tetrachloride, 1,2-dichloroethane, and chlorobenzene; esters such as ethyl acetate, propyl acetate, butyl acetate, and methyl propionate; ketones such as acetone, methyl ethyl ketone, diethyl ketone, methyl isobutyl ketone, and cyclohexanone; amides such as N,N-dimethylformamide, N,N-dimethylacetamide, and N-methylpyrrolidone; nitriles such as acetonitrile and benzonitrile; and sulfoxides such as dimethylsulfoxide and sulfolane.

The polymerization solvents may be used alone or in combination.

Examples of the polymerization initiator include azo initiators and peroxide initiators.

Examples of the azo initiators include 2,2'-azobisisobutyronitrile, 2,2'-azobis(4-methoxy-2,4-dimethylvaleronitrile), 2,2'-azobis(2-cyclopropylpropionitrile), 2,2'-azobis(2,4-dimethylvaleronitrile), 2,2'-azobis(2-methylbutyronitrile), 1,1'-azobis(cyclohexane-1-carbonitrile), 2-(carbamoylazo)isobutyronitrile, 2-phenylazo-4-methoxy-2,4-dimethylvaleronitrile, 2,2'-azobis(2-amidinopropane)dihydrochloride, 2,2'-azobis(N,N'-dimethyleneisobutyramidine), 2,2'-azobis(isobutylamide) dihydrate, 4,4'-azobis(4-cyanopentanoic acid), 2,2'-azobis(2-cyanopropanol), dimethyl-2,2'-azobis(2-methylpropionate), and 2,2'-azobis[2-methyl-N-(2-hydroxyethyl)propionamide].

Examples of the peroxide initiators include t-butyl hydroperoxide, cumene hydroperoxide, dicumyl peroxide, benzoyl peroxide, lauroyl peroxide, caproyl peroxide, di-i-propylperoxydicarbonate, di-2-ethylhexylperoxydicarbonate, t-butylperoxypivalate, 2,2-bis(4,4-di-t-butylperoxycyclohexyl)propane, 2,2-bis(4,4-di-t-amylperoxycyclohexyl)propane, 2,2-bis(4,4-di-t-octylperoxycyclohexyl)propane, 2,2-bis(4,4-di-$\alpha$-cumylperoxycyclohexyl)propane, 2,2-bis(4,4-di-t-butylperoxycyclohexyl)butane, and 2,2-bis(4,4-di-t-octylperoxycyclohexyl)butane.

The polymerization initiators may be used alone or in combination.

The polymerization initiator is used in an amount in the range of usually 0.01 to 5 parts by mass and preferably 0.05 to 3 parts by mass relative to 100 parts by mass of the monomer component of the polymer (A). In addition, at least one selected from a monomer component, a polymerization initiator, and a polymerization solvent may be added as appropriate during the polymerization reaction.

<Physical properties and content of (meth)acrylic polymer (A)>

The polystyrene-equivalent weight-average molecular weight (Mw) of the (meth)acrylic polymer (A) as measured by gel permeation chromatography (GPC) is 300,000 or less, preferably 100,000 to 300,000, and more preferably 200,000 to 270,000. The Mw is preferably equal to or lower than the upper limit value since the obtained adhesive composition exhibits an excellent leveling property, causes recesses and protrusions to disappear as the adhesive layer flows during application of the film to the dried adhesive layer, and can easily form an adhesive layer having less bubbles between the substrate and the adhesive layer. The Mw is preferably equal to or higher than the lower limit value since the obtained adhesive layer exhibits excellent durability and cohesive force.

The molecular weight distribution (Mw/Mn) of the (meth)acrylic polymer (A) as measured by GPC is usually 15 or less, preferably 2 to 10, and more preferably 3 to 8.

The glass transition temperature (Tg) of the (meth)acrylic polymer (A) obtained from a peak temperature of tan δ measured by dynamic mechanical analysis is higher than 0°C and lower than 50°C, is preferably higher than 0°C and 30°C or lower, and is more preferably higher than 0°C and 20°C or lower. When a polymer (A) having a Tg within the aforementioned range is used, an adhesive layer that has a low tack and excellent initial re-applicability can be easily formed. The conditions of the dynamic mechanical analysis are described in detail in the Example section.

The polymer (A) may be a single polymer or two or more polymers.

In the present composition, the percentage content of the polymer (A) is usually 60 mass% or more, preferably 70 mass% or more, and more preferably 80 mass% or more in 100 mass% of the solid component other than the organic solvent in the present composition. When the percentage content of the polymer (A) is within the aforementioned range, the re-removability tends to improve.

<<(Meth)acrylic polymer (Ah)>>

In the present composition, the percentage content of the (meth)acrylic polymer (Ah) having a glass transition temperature (Tg) of 50°C or higher (hereinafter may also be referred to as the "polymer (Ah)") is less than 25 mass%, preferably less than 15 mass%, more preferably 10 mass% or less, yet more preferably 5 mass% or less, and most preferably 0 mass%. Here, the total of the polymer (A) and the polymer (Ah) is assumed to be 100 mass%. When the percentage content of the polymer (Ah) is 25 mass% or more, the polymer (Ah) remains on the adherend during re-removal and tends to contaminate the adherend.

The polymer (Ah) may be a single polymer or two or more polymers.

The glass transition temperature (Tg) of the polymer (Ah) is 50°C or higher, preferably 75°C or higher, and more preferably 100°C or higher. The glass transition temperature (Tg) of the polymer (Ah) can be calculated from, for example, the Fox equation from the monomer units constituting the polymer and the percentage contents thereof.

$$\text{Fox equation: } 1/Tg = (W_1/Tg_1) + (W_2/Tg_2) + \dots + (W_m/Tg_m)$$

$$W_1 + W_2 + \dots + W_m = 1$$

In the equations above, Tg represents the glass transition temperature (unit: K) of the polymer (Ah), $Tg_1$, $Tg_2$, ... , $Tg_m$ represent glass transition temperatures (unit: K) of homopolymers of the respective monomers, and $W_1$, $W_2$, ..., $W_m$ represent mass fractions, in the polymer (Ah), of the constituent units derived from the respective monomers. As the mass fractions of the constituent units derived from the respective monomers, the charge ratios of the respective monomers relative to all monomers during synthesis of the polymer (Ah) can be used.

Values described in Polymer Handbook Forth Edition (Wiley-Interscience 2003), for example, can be used as the glass transition temperatures of homopolymers of the respective monomers in the Fox equation.

The polymer (Ah) is a polymer of a monomer component that contains, as a main component, a (meth)acrylic acid ester of which the homopolymer has a glass transition temperature (Tg) of 50°C or higher and which does not have a crosslinkable functional group.

Examples of the (meth)acrylic acid ester of which the homopolymer has a glass transition temperature (Tg) of 50°C or higher and which does not have a crosslinkable functional group include alkyl (meth)acrylates such as methyl methacrylate, ethyl methacrylate, isopropyl methacrylate, and t-butyl methacrylate; alicyclic group-containing (meth)acrylates such as cyclohexyl methacrylate and isobornyl (meth)acrylate; and aromatic ring-containing (meth)acrylates such as phenoxyethyl methacrylate, benzyl methacrylate, and 2-naphthyl acrylate.

In 100 mass% of the monomer component used to form the polymer (Ah), the ratio of the (meth)acrylic acid ester of which the homopolymer has a glass transition temperature (Tg) of 50°C or higher and which does not have a crosslinkable functional group is preferably 50 mass% or more, more preferably 75 mass% or more, and yet preferably 90 mass% or more.

The monomer component can further contain a (meth)acrylic acid ester of which the homopolymer has a glass transition temperature (Tg) lower than 50°C and which does not have a crosslinkable functional group. Examples include alkyl (meth)acrylates, alicyclic group-containing (meth)acrylates, aromatic ring-containing (meth)acrylates, alkoxyalkyl (meth)acrylates, alkoxypolyalkylene glycol mono(meth)acrylates, and N,N-dialkylaminoalkyl (meth)acrylate.

The monomer component can further contain a crosslinkable functional group-containing monomer. Examples of the crosslinkable functional group-containing monomer include a carboxyl group- or acid anhydride group-containing monomer, a hydroxy group-containing monomer, and an amino group- or monosubstituted amino group-containing monomer, and examples thereof include monomers described in the section regarding the crosslinkable functional group-containing monomer (a3).

The polystyrene-equivalent weight-average molecular weight (Mw) of the polymer (Ah) as measured by gel permeation chromatography (GPC) is usually 1,000 to 100,000 and preferably 5,000 to 30,000.

The molecular weight distribution (Mw/Mn) of the polymer (Ah) as measured by GPC is preferably 1.0 to 5.0 and more preferably 1.5 to 3.5.

<<Crosslinking agent (B)>>

The present composition preferably contains a crosslinking agent (B).

Examples of the crosslinking agent (B) include epoxy crosslinking agents, chelate crosslinking agents, and isocyanate crosslinking agents.

An example of the epoxy crosslinking agents is an epoxy compound having two or more epoxy groups in one molecule. Examples include ethylene glycol diglycidyl ether, polyethylene glycol diglycidyl ether, glycerin diglycidyl ether, glycerin triglycidyl ether, 1,3-bis(N,N-diglycidylaminomethyl)cyclohexane, N,N,N',N'-tetraglycidyl-m-xylylenediamine, N,N,N',N'-tetraglycidylaminophenylmethane, triglycidyl isocyanurate, m-N,N-diglycidylaminophenylglycidyl ether, N,N-diglycidyltoluidine, and N,N-diglycidylaniline.

Examples of the chelate crosslinking agents include metal chelate compounds such as a compound in which alkoxide, acetyl acetone, or ethyl acetoacetate, for example, is coordinated to a polyvalent metal such as aluminum, iron, copper, zinc, tin, titanium, nickel, antimony, magnesium, vanadium, chromium, or zirconium. Examples of the aluminum chelate compound include aluminum isopropylate, aluminum secondary butyrate, aluminum ethyl acetoacetate·diisopropylate, aluminum trisethylacetoacetate, and aluminum trisacetylacetonate.

An example of the isocyanate crosslinking agent is an isocyanate compound that has 2 or more, preferably 2 to 8, and more preferably 3 to 6 isocyanate groups in one molecule. The number of isocyanate groups is preferably within the aforementioned range from the viewpoint of the crosslinking reaction efficiency and maintaining the flexibility of the adhesive layer.

Examples of the diisocyanate compounds having two isocyanate groups in one molecule include aliphatic diisocyanates, alicyclic diisocyanates, and aromatic diisocyanates.

Examples of the aliphatic diisocyanates include aliphatic diisocyanates having 4 to 30 carbon atoms, such as ethylene diisocyanate, tetramethylene diisocyanate, pentamethylene diisocyanate, hexamethylene diisocyanate, 2-methyl-1,5-pentane diisocyanate, 3-methyl-1,5-pentane diisocyanate, and 2,2,4-trimethyl-1,6-hexamethylene diisocyanate.

Examples of the alicyclic diisocyanates include alicyclic diisocyanates having 7 to 30 carbon atoms, such as isophorone diisocyanate, cyclopentyl diisocyanate, cyclohexyl diisocyanate, hydrogenated xylylene diisocyanate, hydrogenated tolylene diisocyanate, hydrogenated diphenylmethane diisocyanate, and hydrogenated tetramethylxylylene diisocyanate.

Examples of the aromatic diisocyanates include aromatic diisocyanates having 8 to 30 carbon atoms, such as phenylene diisocyanate, tolylene diisocyanate, xylylene diisocyanate, naphthylene diisocyanate, diphenyl ether diisocyanate, diphenylmethane diisocyanate, and diphenylpropane diisocyanate.

Examples of the isocyanate compounds having three or more isocyanate groups in one molecule include aliphatic polyisocyanates, alicyclic polyisocyanates, and aromatic polyisocyanates. Specific examples include 2,4,6-triisocyanate toluene, 1,3,5-triisocyanate benzene, and 4,4',4"-triphenylmethane triisocyanate.

In addition, examples of the isocyanate crosslinking agent include multimers (for example, dimer or trimer, biuret, and isocyanurate), derivatives (for example, an addition reaction product between a polyhydric alcohol and two or more molecules of the diisocyanate compound), and polymers of the aforementioned isocyanate compounds having 2 or 3 or more isocyanate groups. Examples of the polyhydric alcohol in the derivatives include, as low-molecular-weight polyhydric alcohols, trihydric or higher alcohols such as trimethylolpropane, glycerin, and pentaerythritol; and, as high-molecular-weight polyhydric alcohols, polyether polyols, polyester polyols, acrylic polyols, polybutadiene polyols, and polyisoprene polyols.

Examples of such an isocyanate crosslinking agent include biurets or isocyanurates of hexamethylene diisocyanate, reaction products between trimethylolpropane and hexamethylene diisocyanate (for example, termolecular addition products of hexamethylene diisocyanate), trimers of diphenylmethane diisocyanate, polymethylene polyphenyl polyisocyanate, biurets or isocyanurates of tolylene diisocyanate, reaction products between trimethylol propane and tolylene diisocyanate or xylylene diisocyanate (for example, termolecular addition products of tolylene diisocyanate or xylylene diisocyanate), polyether polyisocyanate, and polyester polyisocyanate.

The crosslinking agent (B) may be a single crosslinking agent or two or more crosslinking agents.

In the present composition, the crosslinking agent (B) content is usually 0.01 to 15 parts by mass, preferably 0.01 to 10 parts by mass, and more preferably 0.02 to 5 parts by mass relative to 100 parts by mass of the (meth)acrylic polymer (A).

In addition, when an epoxy crosslinking agent is used, the content is preferably 0.01 to 1 part by mass, when a chelate crosslinking agent is used, the content is preferably 0.1 to 5 parts by mass, and when an isocyanate crosslinking agent is used, the content is preferably 1 to 10 parts by mass. These are amounts relative to 100 parts by mass of the (meth)acrylic polymer (A). Furthermore, two or more selected from the epoxy crosslinking agent, the chelate crosslinking agent, and the isocyanate crosslinking agent may be used in such amounts.


<u>\<\<Additives\>\></u>

The present composition may contain, in addition to the components described above, one additive or two or more additives selected from a silane coupling agent, an antistatic agent, an antioxidant, a light stabilizer, a metal corrosion preventing agent, a tackifier, a plasticizer, a crosslink accelerator, a rework agent, a leveling agent, a dye, and a pigment so far as the effects of the present invention are not impaired.


<u>\<\<Organic solvent\>\></u>

The present composition preferably contains one or more organic solvents to adjust the applicability thereof. Examples of the organic solvent are those solvents described as the examples of the polymerization solvent in the section regarding the production conditions for the (meth)acrylic polymer (A). For example, an adhesive composition can be prepared by mixing a crosslinking agent (B) with a polymer solution containing the (meth)acrylic polymer (A) and a polymerization solvent obtained by the aforementioned polymerization. In addition, to improve the leveling property, the present composition may further contain a high-boiling-point solvent. The high-boiling point solvent in the present invention is a solvent that has a boiling point (normal boiling point) of 90°C or higher at 1 atmosphere, and examples thereof include toluene (normal boiling point: 111°C), methylcyclohexane (normal boiling point: 101°C), butyl acetate (normal boiling point: 126°C), 1-propanol (normal boiling point: 97°C), and methyl cellosolve (normal boiling point: 124°C). For example, a high-boiling-point solvent that has a normal boiling point higher than the drying temperature for forming a layer of the adhesive composition can be used. The percentage content of the organic solvent in the present composition is usually 50 to 90 mass% and preferably 55 to 85 mass%.

<<Preparation of composition>>

The present composition can be prepared by mixing the (meth)acrylic polymer (A), and, if necessary, other components such as the crosslinking agent (B) and additives by a known method. In one embodiment, for example, a crosslinking agent (B) and, if necessary, additives are added to the polymer (A)-containing polymer solution obtained in synthesizing the (meth)acrylic polymer (A).

[Decorative film and decorative molded body]

A decorative film according to an embodiment of the present invention has a releasing film, an adhesive layer formed on the releasing film and formed of the present composition, and a substrate on a surface of the adhesive layer, the surface being on an opposite side from the releasing film.
A decorative molded body according to an embodiment of the present invention has a molded body (in this description, also referred to as an "adherend"), and an adhesive layer-attached substrate disposed on a surface of the molded body and obtained by removing the releasing film from the decorative film described above. More specifically, the decorative molded body has a molded body, an adhesive layer, and, if necessary, a decorative layer, and a substrate arranged in this order.

<<Releasing film>>

The releasing film protects the surface of the adhesive layer until the decorative film is actually used. The releasing film is removed at the time the decorative film is used. The releasing film may be any film that can be easily removed from the adhesive layer, and examples thereof include resin films, specifically, films of polyesters such as polyethylene terephthalate and polybutylene terephthalate; and films of polyolefins such as polyethylene, polypropylene, and ethylene-vinyl acetate copolymers.
At least one surface of the releasing film may be subjected to an easy-release treatment using a release treatment agent based on silicone, fluorine, a long-chain alkyl, or an aliphatic acid amide, for example.
In order to facilitate removal of bubbles between the adherend and the adhesive layer during application of the decorative film to the adherend, regularly patterned grooves that are grooves of a particular shape arranged in a regular manner, or irregularly patterned grooves that are grooves of irregular shapes arranged in an irregular manner may be formed in the adhesive layer surface (adhesive surface) that comes into contact with the adherend. The interval of arranging the grooves in the adhesive layer is preferably 10 $\mu$m or more and 2000 $\mu$m or less and the width of the grooves is preferably 10 $\mu$m or more and 500 $\mu$m or less. The depth of the groove (the distance from the adhesive surface to the bottom of the groove measured in the direction toward the substrate) is usually 1 $\mu$m or more and 100 $\mu$m or less, and the thickness is less than the thickness of the adhesive layer. The shape of the groove is not particularly limited as long as the effects of the present invention are not impaired. For example, the shape of the groove at a cross section taken in a direction perpendicular to the adhesive surface can be substantially rectangular (includes a trapezoidal shape), substantially semicircular, or substantially semi-elliptical.
To impart the groove structure to the adhesive layer, a releasing film having recessed and protruding shapes can be used. For example, the groove structure can be imparted to the adhesive layer by applying the adhesive composition to the unlevel surface of the releasing film having recessed and protruding shapes, and drying the applied adhesive composition to form the layer and thereby transfer the recessed and protruding shapes onto the layer of the adhesive composition, or by applying the releasing film having recessed and protruding shapes to the layer of the adhesive composition to thereby transfer the recessed and protruding shapes onto the layer of the adhesive composition.
The recessed and protruding shapes on the releasing film preferably have shapes that enable transfer of a continuous groove structure onto the adhesive layer, and, in one embodiment, the height of the protrusions is 1 to 100 $\mu$m, the width of the protrusions is 10 to 500 $\mu$m, and the interval of the protrusions is 10 to 2000 $\mu$m.
When a groove structure is imparted to the adhesive layer by using the releasing film having recessed and protruding shapes, a recess/protrusion structure may appear on the side (substrate side) of the adhesive layer not in contact with the releasing film. For example, when an adhesive layer is formed by applying the adhesive composition to the releasing film, drying the applied adhesive composition to form a layer of the adhesive composition, attaching an exposed surface of the obtained layer not in contact with the releasing film to a substrate, and performing aging, bubbles are likely to be trapped between the substrate and the adhesive layer, and this may degrade the appearance or decrease the adhesion between the substrate and the adhesive layer. However, according to an embodiment of the present invention, such issues can be addressed by using an adhesive composition that contains the (meth)acrylic polymer (A) having a weight-average molecular weight of 300,000 or less described above.
The thickness of the releasing film is usually 10 to 500 $\mu$m and is preferably 25 to 200 $\mu$m.

<<Adhesive layer>>

The adhesive layer is formed of the present composition described above.

The gel fraction of the adhesive layer is preferably 40 mass% or more and more preferably 40 to 80 mass%. When the gel fraction is within the aforementioned range, the adhesive layer tends to exhibit excellent re-removability.

The gel fraction is measured as follows. About 0.1 g of the adhesive is taken from the adhesive layer into a sampling jar, 30 mL of ethyl acetate is added thereto, the resulting mixture is shaken for 4 hours, the content of the sampling jar is filtered through a 200-mesh stainless steel metal screen, and the residue on the metal screen is dried at 100°C for 2 hours, followed by measuring the dry weight thereof. The gel fraction of the adhesive layer is determined from the following equation:

$$\cdot \text{ Gel fraction (\%) = (dry weight/weight of adhesive sampled)}$$

$$\times \text{ 100 (\%)}$$

As mentioned above, the adhesive layer can have a groove structure (recessed and protruding shapes) constituted by multiple grooves arranged at predetermined intervals or irregularly on the adherend-contact-side (releasing film-side) surface.

The thickness of the adhesive layer is usually 10 to 100 $\mu$m and is preferably 20 to 80 $\mu$m.

<<Substrate>>

The substrate usually constitutes the outermost layer of a decorative molded body obtained by applying the decorative film to an adherend, which is the subject to be decorated. The substrate may be colored or colorless. Furthermore, the substrate may be transparent, semitransparent, or opaque. Furthermore, the substrate may have a single layer structure or may be constituted by multiple layers.

An example of the substrate is a substrate formed of a thermoplastic resin. Examples of the thermoplastic resin include vinyl chloride resins; acrylonitrile/butadiene/styrene resins; polycarbonate resins; polyurethane resins; polyolefin resins such as polyethylene resins and polypropylene resins; (meth)acrylic resins such as methyl polymethacrylate; and polyesters such as polyethylene terephthalate, polybutylene terephthalate, and polyethylene naphthalate, and, among these, vinyl chloride resins are preferable.

The substrate may additionally contain, depending on the usage, function-imparting substances such as inorganic particles such as silica, a plasticizer, a coloring agent, and a UV absorber. In addition, for example, patterns, characters, or pictorial designs may be printed on the substrate surface to impart designability, and, for example, patterns, characters, or pictorial designs may be formed inside the substrate.

The thickness of the substrate is usually 20 to 200 $\mu$m and is preferably 50 to 150 $\mu$m.

<<Decorative layer>>

The decorative film according to an embodiment of the present invention can further have a decorative layer between the substrate and the adhesive layer. The decorative layer is a layer provided to impart the designability to the decorative film, and is a layer that expresses patterns, characters, or pictorial designs, for example.

<<Method for producing decorative film>>

The decorative film according to an embodiment of the present invention can be obtained by a method that involves applying the present composition to a releasing film, drying the applied composition to form a layer of the adhesive composition, attaching an exposed surface of the obtained layer not in contact with the releasing film to a substrate, and performing aging, or by a method that involves applying the present composition to a substrate, drying the applied composition to form a layer of the adhesive composition, and attaching an exposed surface of the obtained layer not in contact with the substrate to a releasing film, and performing aging. Of these, the former method is preferable from the viewpoint of preventing damage on the substrate by the solvent that can be contained in the composition.

The conditions for forming the layer of the adhesive composition are as follows, for example. The present composition is applied to a releasing film or a substrate and dried. The drying conditions differ depending on the type of the organic solvent; however, the drying temperature is usually 50 to 150°C and the drying time is usually 1 to 10 minutes.

Examples of the method for applying the adhesive composition include a spin coating method, a knife coating method, a roll coating method, a bar coating method, a blade coating method, a die coating method, and a gravure coating method.

The aging conditions are as follows, for example. Aging is performed usually for 1 day or longer and preferably 2 to 10 days, usually at 5 to 60°C and preferably at 15 to 50°C in an environment having a relative humidity of usually 30 to 70% and preferably 40 to 70%. When crosslinking is performed under these aging conditions, a crosslinked body (network polymer) formed of the (meth)acrylic polymer (A) and the crosslinking agent (B) can be efficiently formed.

<<Usage>>

An example of the adherend for the decorative film according to an embodiment of the present invention is a molded body such as an article having a three dimensional shape and is preferably an article having a three dimensional curved surface. Specific examples include bodies of vehicles, interior materials for vehicles, construction materials, and decorative panels. Examples of the "vehicles" are four-wheel cars such as passenger automobiles, buses, and trucks; two-wheel cars such as motorbikes, motor scooters, and motorized bicycles; and trains.

The decorative film according to an embodiment of the present invention is particularly preferable for use as a film for vehicles, specifically, a film (for example, a car-wrapping film) for vehicle exterior. When applying a car-wrapping film to a car body, in many cases, a large film is applied manually and is removed from the car body possibly after a long time has passed since the application. Since the decorative film according to an embodiment of the present invention has excellent initial re-applicability and re-removability as mentioned above, the decorative film is suitable as a car-wrapping film.

The material forming the adherend is not particularly limited, and examples include metal materials; wood; and plastics such as acrylonitrile/butadiene/styrene resins, polycarbonate resins, polyester resins, polypropylene resins, and polyethylene resins which may have coated surfaces.

Examples of the method for applying the decorative film to a molded body serving as an adherend include manual application, a vacuum molding method, a compressed air molding method, and a thermal high-pressure molding method. Among these, a vacuum molding method is preferable.

EXAMPLES

Hereinafter, the present invention is described in further details using examples; however, the present invention is not limited by these examples. In the descriptions of, for example, the examples below, "parts" indicates "parts by mass" unless otherwise noted.

[Weight-average molecular weight (Mw)]

The weight-average molecular weight (Mw) of a (meth)acrylic polymer is determined by gel permeation chromatography (GPC) under the following conditions.

- Measurement instrument: HLC-8320GPC (produced by TOSOH CORPORATION)
- GPC column configuration: following four columns (all produced by TOSOH CORPORATION)

    (1) TSKgel HxL-H (guard column)
    (2) TSKgel GMHxL
    (3) TSKgel GMHxL
    (4) TSKgel G2500HxL

- Flow rate: 1.0 mL/min
- Column temperature: 40°C
- Sample concentration: 1.5% (w/v) (diluted with tetrahydrofuran)
- Mobile phase solvent: tetrahydrofuran
- Standard polystyrene equivalent

[Preparation of DMA sample]

The polymer solution prepared in the synthetic example below was applied to a silicone-treated polyethylene terephthalate film (PET film), worked with a doctor blade to form a coating, and dried in an 80°C environment for 5 minutes; subsequently, another PET film subjected to a release treatment was attached to a surface of the coating on an opposite side from the surface attached to the PET film, and aging is performed by leaving the attached films to stand still in a 23°C/50% RH environment for 7 days to obtain a DMA sample sandwiched by two PET films and having a

thickness of 50 μm. One PET film was removed from this DMA sample, the resulting sample was attached in a 23°C/50% RH environment, multiple DMA samples were attached in the same manner, and the resulting sample was treated in a 50°C/5 atm autoclave for 20 minutes to obtain a DMA sample having a thickness of 1.0 mm.

[Glass transition temperature (Tg)]

From the DMA sample having a thickness of 1.0 mm described above, the loss tangent (tan δ) was determined by measuring a viscoelastic spectrum with "Physica MCR300" produced by Anton Paar on the basis of dynamic mechanical analysis (under the conditions of temperature range: -40 to 160°C, temperature elevation rate: 3.67°C/minute, frequency: 1 Hz) in accordance with JIS K 7244. In the loss tangent, the temperature at which the maximum was observed was assumed to be the glass transition temperature (Tg).

[Synthetic Example 1]

Into a reactor equipped with a stirrer, a reflux condenser, a thermometer, and a nitrogen inlet tube, 20 parts of methyl methacrylate, 70 parts of n-butyl acrylate, 10 parts of acrylic acid, and 100 parts of an ethyl acetate solvent were charged, and the temperature was elevated to 80°C while introducing nitrogen gas. Next, 0.1 parts of 2,2'-azobisisobutyronitrile was added, and the polymerization reaction was performed at 80°C for 6 hours in a nitrogen gas atmosphere. Upon termination of the reaction, the product was diluted with ethyl acetate to prepare a polymer solution having a solid concentration of 30 mass%. The weight-average molecular weight (Mw) of the obtained (meth)acrylic polymer (A-1) was 250,000.

[Synthetic Examples 2, 4, and 6]

Polymer solutions each having a solid concentration of 30 mass% were prepared as in Synthetic Example 1 except that the monomer component used in the polymerization reaction was changed as indicated in Table 1. The results are indicated in Table 1.

[Synthetic Example 3]

Into a reactor equipped with a stirrer, a reflux condenser, a thermometer, and a nitrogen inlet tube, 35 parts of t-butyl acrylate, 55 parts of n-butyl acrylate, 10 parts of acrylic acid, and 160 parts of an ethyl acetate solvent were charged, and the temperature was elevated to 80°C while introducing nitrogen gas. Next, 0.1 parts of 2,2'-azobisisobutyronitrile was added, and the polymerization reaction was performed at 80°C for 6 hours in a nitrogen gas atmosphere. Upon termination of the reaction, the product was diluted with ethyl acetate to prepare a polymer solution having a solid concentration of 30 mass%. The weight-average molecular weight (Mw) of the obtained (meth)acrylic polymer (A-3) was 250,000.

[Synthetic Example 5]

A polymer solution having a solid concentration of 30 mass% was prepared as in Synthetic Example 3 except that the monomer component used in the polymerization reaction was changed as indicated in Table 1. The results are indicated in Table 1.

[Synthetic Example 7]

Into a reactor equipped with a stirrer, a reflux condenser, a thermometer, and a nitrogen inlet tube, 20 parts of methyl methacrylate, 70 parts of n-butyl acrylate, 10 parts of acrylic acid, and 70 parts of an ethyl acetate solvent were charged, and the temperature was elevated to 80°C while introducing nitrogen gas. Next, 0.1 parts of 2,2'-azobisisobutyronitrile was added, and the polymerization reaction was performed at 80°C for 6 hours in a nitrogen gas atmosphere. Upon termination of the reaction, the product was diluted with ethyl acetate to prepare a polymer solution having a solid concentration of 30 mass%. The weight-average molecular weight (Mw) of the obtained (meth)acrylic polymer (cA-4) was 450,000.

[Table 1]

| | | | | Synthetic Example 1 | Synthetic Example 2 | Synthetic Example 3 |
|---|---|---|---|---|---|---|
| | | | | A-1 | A-2 | A-3 |
| (Meth)acrylic polymer (A) or comparative (meth)acrylic polymer | a1 | Methyl methacrylate | [parts] | 20 | 24 | - |
| | | t-Butyl acrylate | [parts] | - | - | 35 |
| | a2 | n-Butyl acrylate | [parts] | 70 | 70 | 55 |
| | a3 | Acrylic acid | [parts] | 10 | 6 | 10 |
| | Weight-average molecular weight (Mw) | | [$10^4$] | 25 | 25 | 25 |
| | Glass transition temperature (Tg) | | [°C] | 10 | 9 | 10 |

[Table 1 (continued)]

| | | | | Synthetic Example 4 | Synthetic Example 5 | Synthetic Example 6 | Synthetic Example 7 |
|---|---|---|---|---|---|---|---|
| | | | | cA-1 | cA-2 | cA-3 | cA-4 |
| (Meth)acrylic polymer (A) or comparative (meth)acrylic polymer | a1 | Methyl methacrylate | [parts] | - | - | - | 20 |
| | | t-Butyl acrylate | [parts] | - | - | 35 | - |
| | a2 | n-Butyl acrylate | [parts] | 90 | 90 | 55 | 70 |
| | a3 | Acrylic acid | [parts] | 10 | 10 | 10 | 10 |
| | Weight-average molecular weight (Mw) | | [$10^4$] | 60 | 25 | 60 | 45 |
| | Glass transition temperature (Tg) | | [°C] | -11 | -15 | 16 | 16 |

[Example 1]

The polymer solution (solid concentration: 30 mass%) obtained in Synthetic Example 1 was mixed with 0.09 parts (solid amount) of TETRAD-X (epoxy crosslinking agent produced by MITSUBISHI GAS CHEMICAL COMPANY, INC.) relative to 100 parts of the solid component of the (meth)acrylic polymer (A-1) contained in the solution so as to obtain an adhesive composition.

[Examples 2 to 6 and Comparative Examples 1 to 5]

An adhesive composition was obtained as in Example 1 except that the blend composition was changed as indicated in Table 2.

In Table 2, "high Tg polymer" is the following copolymer having a Tg of 105°C.

```
Copolymer of methyl methacrylate:dimethylaminoethyl

acrylate = 95/5 (mass ratio) (weight-average molecular weight

(Mw): 19,000)
```

The "crosslinking agent" in Table 2 is as follows:

TETRAD-X: epoxy crosslinking agent (produced by MITSUBISHI GAS CHEMICAL COMPANY, INC.)
NACEM Aluminum: chelate crosslinking agent (produced by NIHON KAGAKU SANGYO CO., LTD.)
CORONATE L: isocyanate crosslinking agent (produced by TOSOH CORPORATION)

[Preparation of decorative film]

The adhesive composition obtained in Example or Comparative Example was applied to a releasing film having grid-shaped protrusions (width of protrusions: 100 μm, interval of protrusions: 800 μm, height of protrusions: 8 μm) and dried at 80°C for 4 minutes to form a layer of the adhesive composition having a thickness of 35 μm. The layer of the adhesive composition was laminated with a 65 μm-thick flexible vinyl chloride film and aged at 40°C for 3 days to prepare a decorative film.

[Bubble test]

After the releasing film having the grid-shaped protrusions was removed from the obtained decorative film, the adhesive layer surface of the adhesive layer-attached film was positioned to face upward, the adhesive layer-attached film was observed with an incident-light-type optical microscope, and evaluation was performed according to the following standards.

AA: No bubbles were observed.
A: Few bubbles were observed in some parts of the adhesive layer-attached film, but this does not pose any practical problem.
B: Small bubbles were observed in all parts of the adhesive layer-attached film.
C: Large bubbles were observed in all parts of the adhesive layer-attached film.

[Tack test]

After the releasing film having the grid-shaped protrusions was removed from the obtained decorative film, a ring-shaped sample (φ 30 mm × 100 mm) was prepared by arranging the adhesive layer surface to face outward, and was set on a tensile tester (Strograph produced by Shimadzu Corporation). The aforementioned sample was brought into contact with a melamine coated panel (produced by NIPPON TACT CO., LTD.) serving as an adherend at a dropping speed of 1000 mm/min, retained thereat for 0.5 seconds, and then lifted upward at the same speed, during which time the stress was measured and evaluated according to the following standards.

AA: The measured value was 1 N/30 mm or less.
A: The measured value was more than 1 N/30 mm but not more than 3 N/30 mm.
B: The measured value was more than 3 N/30 mm but not more than 6 N/30 mm.
C: The measured value was more than 6 N/30 mm.

[Re-removability test]

After the releasing film having the grid-shaped protrusions was removed from the obtained decorative film, the adhesive layer surface was attached to a stainless steel member (BA-SUS, sample width: 25 mm) serving as an adherend, and, after attaching, the resulting product was left to stand still in a 85°C/85% RH environment for a week to obtain a sample. By using a tensile tester (Strograph produced by Shimadzu Corporation), the amount of residual adhesive when an end portion of the sample was peeled at a peeling angle of 180° and a peeling speed of 300 mm/min in a measurement environment of 23°C/50% RH was observed with naked eye.

AA: No contamination or residual adhesive was observed on the adherend after peeling.
A: Contamination was observed on the adherend after peeling, but could be wiped off with an absorbent cotton containing isopropyl alcohol (IPA).
B: Residual adhesive was observed over more than 0% to 50% of the attached area of the adherend after peeling. This residual adhesive could not be wiped off with an absorbent cotton containing IPA.
C: Residual adhesive was observed over more than 50% to 100% or less of the attached area of the adherend after peeling. This residual adhesive could not be wiped off with an absorbent cotton containing IPA.

[Tack strength test]

After the releasing film having the grid-shaped protrusions was removed from the obtained decorative film, the adhesive layer surface was attached to BA-SUS (sample width: 25 mm) serving as an adherend, and, after attaching, the resulting product was left to stand still in a 23°C/50% RH environment for 20 minutes to obtain a sample. By using a tensile tester (Strograph produced by Shimadzu Corporation), the stress that occurred when the end portion of the sample was peeled at a peeling angle of 180° and a peeling speed of 300 mm/min in a measurement environment of 23°C/50% RH was measured.

[Table 2]

| | | | Example 1 | Example 2 | Example 3 | Example 4 | Example 5 | Example 6 |
|---|---|---|---|---|---|---|---|---|
| (Meth)acrylic polymer (A) or comparative (meth)acrylic polymer | A-1 | [parts] | 100 | | | | | |
| | A-2 | [parts] | | 100 | 100 | 100 | | 100 |
| | A-3 | [parts] | | | | | 100 | |
| | cA-1 | [parts] | | | | | | |
| | cA-2 | [parts] | | | | | | |
| | cA-3 | [parts] | | | | | | |
| | cA-4 | [parts] | | | | | | |
| High Tg polymer | | [Parts] | | | | | | 10 |
| Crosslinking agent | TETRAD-X | [parts] | 0.09 | 0.09 | 0.07 | | 0.09 | 0.09 |
| | NACEM Aluminum | [parts] | | | | 0.7 | | |
| | CORONATE L | [parts] | | | 1.5 | | | |
| Bubbles | | - | AA | AA | AA | AA | AA | A |
| Tack | | - | AA | A | A | A | AA | AA |
| Re-release | | - | AA | AA | AA | AA | AA | A |
| Tack strength | | [N/25 mm] | 14.2 | 12.5 | 12.2 | 12.8 | 13.8 | 11.0 |

[Table 2 (continued)]

| | | | Comparative Example 1 | Comparative Example 2 | Comparative Example 3 | Comparative Example 4 | Comparative Example 5 |
|---|---|---|---|---|---|---|---|
| (Meth)acrylic polymer (A) or comparative (meth)acrylic polymer | A-1 | [parts] | | | | | |
| | A-2 | [parts] | | | | 100 | |
| | A-3 | [parts] | | | | | |
| | cA-1 | [parts] | 100 | | | | |
| | cA-2 | [parts] | | 100 | | | |
| | cA-3 | [parts] | | | 100 | | |
| | cA-4 | [parts] | | | | | 100 |
| High Tg polymer | | [Parts] | | | | 35 | |
| Crosslinking agent | TETRAD-X | [parts] | 0.09 | 0.09 | 0.09 | 0.09 | 0.09 |
| | NACEM Aluminum | [parts] | | | | | |
| | CORONATE L | [parts] | | | | | |
| Bubbles | | - | B | AA | C | C | C |
| Tack | | - | C | C | B | AA | A |
| Re-release | | - | A | B | AA | B | A |
| Tack strength | | [N/25 mm] | 7.4 | 9.2 | 11.9 | 8.1 | 15.1 |

**Claims**

1.  An adhesive composition for a decorative film, the adhesive composition comprising:

    a (meth)acrylic polymer (A) that satisfies (I) and (II) below, has a weight-average molecular weight of 300,000 or less as measured by gel permeation chromatography, and has a glass transition temperature of higher than 0°C and lower than 50°C as determined from a peak temperature of tan $\delta$ measured by dynamic mechanical analysis,
    wherein, relative to a total of 100 mass% of the (meth)acrylic polymer (A) and a (meth)acrylic polymer (Ah) having a glass transition temperature of 50°C or higher, a percentage content of the (meth)acrylic polymer (Ah) is less than 25 mass%.

    (I) The (meth)acrylic polymer (A) is a polymer of a monomer component that contains 19 mass% or more of a monomer (a1) that does not have a crosslinkable functional group.
    (II) A homopolymer of the monomer (a1) has a glass transition temperature of 0°C or higher.

2.  The adhesive composition for a decorative film according to Claim 1, wherein the monomer (a1) is a (meth)acrylic acid ester.

3.  The adhesive composition for a decorative film according to Claim 1 or 2, further comprising a crosslinking agent (B).

4.  A decorative film comprising:

    a releasing film;
    an adhesive layer formed of the adhesive composition for a decorative film according to any one of Claims 1 to 3, the adhesive layer being formed on the releasing film; and
    a substrate disposed on a surface of the adhesive layer, the surface being on an opposite side from the releasing film.

5. The decorative film according to Claim 4, wherein the decorative film is used for vehicles.

6. A decorative molded body comprising:

a molded body; and
an adhesive layer-attached substrate disposed on a surface of the molded body, the adhesive layer-attached substrate being obtained by removing the releasing film from the decorative film according to Claim 4 or 5.

7. The decorative molded body according to Claim 6, wherein the molded body is a vehicle.

## INTERNATIONAL SEARCH REPORT

| | International application No. |
|---|---|
| | PCT/JP2020/033925 |

A. CLASSIFICATION OF SUBJECT MATTER
B32B 27/00(2006.01)i; C09J 133/04(2006.01)i; C09J 7/38(2018.01)i
FI: C09J133/04; C09J7/38; B32B27/00 M; B32B27/00 E
According to International Patent Classification (IPC) or to both national classification and IPC

B. FIELDS SEARCHED

Minimum documentation searched (classification system followed by classification symbols)
C09J1/00-5/10; C09J7/00-7/50; C09J9/00-201/10; B32B1/00-43/00

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2012-77177 A (DAINIPPON PRINTING CO., LTD.) 19 April 2012 (2012-04-19) claims 1-4, paragraphs [0001], [0019]-[0022], [0026], [0032], [0041], [0042], examples 1-4, table 1 | 1-7 |
| X<br>A | JP 2016-207900 A (DAINIPPON PRINTING CO., LTD.) 08 December 2016 (2016-12-08) claims 1, 3-7, paragraphs [0036], [0108], [0122], examples 1, 2 | 1-4, 6<br>5, 7 |
| A | JP 2003-3136 A (MITSUBISHI RAYON CO., LTD.) 08 January 2003 (2003-01-08) claims 1-5, paragraphs [0001], [0027], [0061], [0062], examples 1-5, tables 1, 2 | 1-7 |
| A | JP 2011-231218 A (TOYO INK SC HOLDINGS CO., LTD.) 17 November 2011 (2011-11-17) claims 1-4, paragraphs [0001], [0006], [0049], [0054], examples 1-17, tables 1, 2 | 1-7 |

☒ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 October 2020 (27.10.2020) | 10 November 2020 (10.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

<table>
<tr><td colspan="3" align="center">**INTERNATIONAL SEARCH REPORT**</td><td>International application No.<br>PCT/JP2020/033925</td></tr>
<tr><td colspan="4">C (Continuation).   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>A</td><td colspan="2">JP 2007-197668 A (LINTEC CORP.) 09 August 2007<br>(2007-08-09) claims 1-3, paragraphs [0001],<br>[0005], [0022], comparative example 3, table 1</td><td>1-7</td></tr>
<tr><td>A</td><td colspan="2">JP 2019-73641 A (NIPPON CARBIDE INDUSTRIES CO.,<br>INC.) 16 May 2019 (2019-05-16) claims 1, 6-8,<br>paragraph [0001], comparative example 5, tables 1,<br>4</td><td>1-7</td></tr>
</table>

Form PCT/ISA/210 (continuation of second sheet) (January 2015)

**INTERNATIONAL SEARCH REPORT**

Information on patent family members

International application No.

PCT/JP2020/033925

| Patent Documents referred in the Report | Publication Date | Patent Family | Publication Date |
|---|---|---|---|
| JP 2012-77177 A | 19 Apr. 2012 | (Family: none) | |
| JP 2016-207900 A | 08 Dec. 2016 | (Family: none) | |
| JP 2003-3136 A | 08 Jan. 2003 | (Family: none) | |
| JP 2011-231218 A | 17 Nov. 2011 | (Family: none) | |
| JP 2007-197668 A | 09 Aug. 2007 | (Family: none) | |
| JP 2019-73641 A | 16 May 2019 | (Family: none) | |

Form PCT/ISA/210 (patent family annex) (January 2015)

**EP 4 029 693 A1**

REFERENCES CITED IN THE DESCRIPTION

**Patent documents cited in the description**

- JP 2009035588 A

- JP 2009234011 A

**Non-patent literature cited in the description**

- Polymer Handbook Forth Edition. Wiley-Interscience, 2003